Europäisches Patentamt

European Patent Office

Office européen des brevets

(11) Veröffentlichungsnummer: **0 415 272 A1**

# EUROPÄISCHE PATENTANMELDUNG

(21) Anmeldenummer: 90116189.3

(22) Anmeldetag: 23.08.90

(51) Int. Cl.5: **B65B 13/22**

(30) Priorität: 31.08.89 CH 3161/89

(43) Veröffentlichungstag der Anmeldung:
06.03.91 Patentblatt 91/10

(84) Benannte Vertragsstaaten:
BE CH DE DK ES FR GB IT LI NL

(71) Anmelder: Strapex AG
Nordstrasse 1
CH-5610 Wohlen(CH)

(72) Erfinder: Wassmer, Hans Jörg
Eulenweg 3
Ch-5608 Stetten(CH)

(74) Vertreter: Patentanwälte Schaad, Balass &
Partner
Dufourstrasse 101 Postfach
CH-8034 Zürich(CH)

(54) Anordnung an einem Umreifungsgerät zum Spannen einer um einen zu umreifenden Gegenstand gelegten Schlaufe.

(57) Es ist eine zu einem in Spannrichtung wirksamen Arbeitshub und zu einem Rückhub hin und her antreibbare Spannbacke (15) vorgesehen, die mit einer inbezug auf diese ortsfeste Gegenbacke (17) zusammenwirkt. Diese Backen dienen dazu, zumindest den einen Endbereich einer zu spannenden Bandschlaufe zwischen sich aufzunehmen. Um den Spannvorgang in kürzerer Zeit durchzuführen, ohne dass eine Rücklaufsperre notwendig wäre, ist der genannten Spannbacke (15) eine weitere Spannbacke (21) zugeordnet, die gleichsinnig, jedoch im Gegentakt zur erstgenannten Spannbacke (15) antreibbar ist, und die ebenfalls mit einer ortsfesten Gegenbacke (17) zusammenwirkt.

Fig.1

EP 0 415 272 A1

Die vorliegende Erfindung betrifft eine Anordnung gemäss dem Oberbegriff des Patentanspruches 1.

Eine solche Anordnung ist beispielsweise aus der DE-C-2.709.322 (und der entsprechenden US-A-4,096,019) oder auch aus der DE-C-2.521.474 (und der entsprechenden US-A-3,984,278) bekannt.

Bei diesen bekannten Anordnungen ist der in einem Arbeitshub und einem Rückhub antreibbaren Spannbacke eine Rücklaufsperre zugeordnet, die dafür sorgt, dass während des Rückhubes der Spannbacke sich der Endbereich der Bandschlaufe nicht entgegen der Spannrichtung wieder verschiebt. Dies bedeutet aber, dass der Spannvorgang schrittweise erfolgt, d.h. jeweils nur während eines Arbeitshubes der Spannbacke, während des darauffolgenden Rückhubes jedoch ruht.

Daneben ist aus der DE-A-37 14 893 (und der entsprechenden GB-A-2,209,374) ein Umreifungsgerät bekannt, das zum Spannen des um einen Gegenstand herum geführten Bandes eine Spannanordnung aufweist, welche eine Vielzahl von an einer umlaufenden Kette befestigten Spannbacken aufweist. Am einen der beiden übereinanderliegenden Bandenden greifen daher immer mehrere Spannbacken an, die jeweils nacheinander im Bereich eines Umlenkrades auf das Band zur Einwirkung kommen.

Dies bedeutet, dass die Spannbacken zuerst nur im Bereich ihres vorlaufenden Endes mit dem Band in Berührung kommen und erst allmählich vollständig am Band angreifen. Dies kann jedoch zu unerwünschten Verletzungen des Bandes beim Zusammentreffen mit den Spannbacken führen. Zudem ist diese Spannanordnung von aufwendiger Konstruktion.

Der vorliegenden Erfindung liegt nun die Aufgabe zugrunde, eine Anordnung der eingangs genannten Art zu schaffen, welche bei platzsparender und vergleichsweise einfacher Bauweise in der Lage ist, unter weitgehender Schonung des Bandes letzteres beim Spannen unter eine grössere Zugkraft zu setzen als dies bei den Geräten der gattunggemässen Art möglich ist.

Erfindungsgemäss wird diese Aufgabe durch die Merkmale des kennzeichnenden Teils des Anspruches 1 gelöst.

Da jede der beiden Spannbacken während ihres Arbeitshubes ein Zurücklaufen der Endbereiche der Bandschlaufe entgegen der Spannrichtung nicht zulässt und die beiden Spannbacken im Gegentakt zueinander angetrieben sind, erübrigt sich eine eigentliche Rücklaufsperre. Der Spannvorgang erfolgt kontinuierlich, d.h. nicht schrittweise, was eine höhere Zugspannung im gespannten Band möglich macht.

Die beiden im Gegentakt vorwärts und rückwärts bewegten Spannbacken lassen sich jeweils im wesentlichen mit ihrer ganzen dem Band zugekehrten wirksamen Fläche auf das Band aufsetzen und von diesem abheben, wodurch die daraus resultierenden Beschädigungen gering gehalten werden können.

Bevorzugte Weiterausgestaltungen des Erfindungsgegenstandes und insbesondere des Antriebes der Spannbacken sind in den abhängigen Ansprüchen umschrieben.

Im folgendend wird anhand der Zeichnung ein Ausführungsbeispiel des Erfindungsgegenstandes näher erläutert. Es zeigen rein schematisch:

Fig.1: ein als Handgerät ausgebildetes Spann- und Schweissgerät zum Spannen und Verschweissen von Umreifungsbändern aus Kunststoff, und

Fig. 2 und 3 in Seitenansicht, bzw. in Draufsicht und teilweise im Schnitt das im Gerät gemäss Fig. 1 verwendete Getriebssystem.

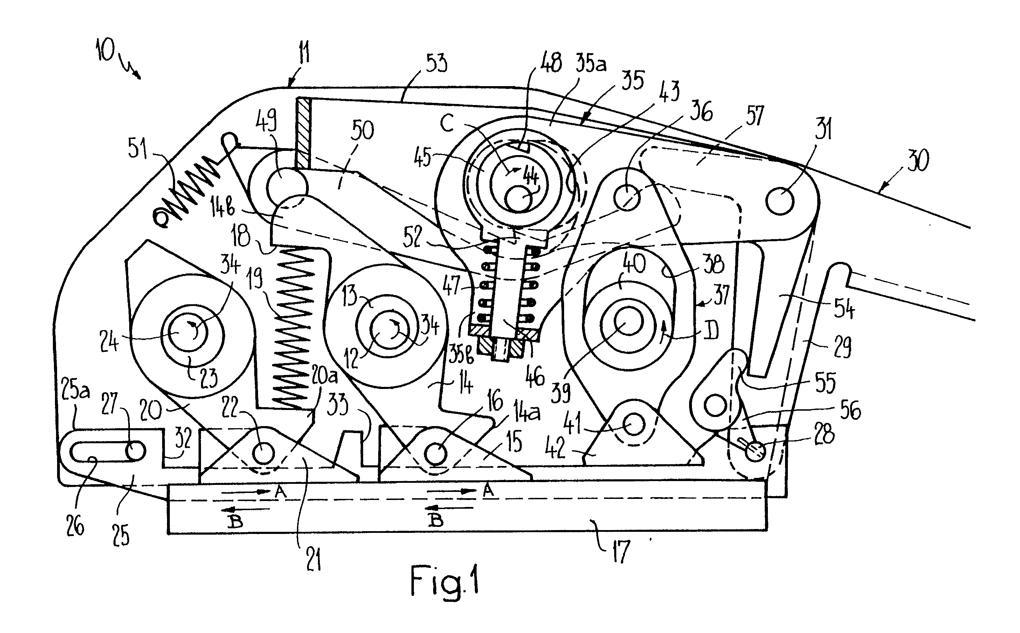

Das in Figur 1 nur schematisch dargestellte Handgerät 10 zum Verschweissen der Enden von Kunststoffbändern besitzt ein nur durch seinen Umriss dargestelltes Gehäuse 11. Im Gehäuse 11 ist eine Welle 12 drehbar gelagert, auf der ein Exzenter 13 festsitzt. Auf dem Exzenter 13 ist ein zweiarmiger Hebel 14 drehbar gelagert, an dessen in der Figur 1 unten erscheinenden Ende 14a eine erste Spannbacke 15 mittels eines Stiftes 16 gelenkig befestigt ist. Diese Spannbacke 15 wirkt mit einer festen Gegenbacke 17 zusammen. Das der Spannbacke 15 gegenüberliegende Ende 14b des zweiarmigen Hebels 14 weist eine Schulter 18 auf, an der das eine Ende einer Druckfeder 19 abgestützt ist. Das andere Ende dieser Druckfeder 19 ist auf dem in der Figur 1 unten erscheinenden Endbereich 20a eines weiteren Hebels 20 abgestützt. An diesem Ende 20a ist eine weitere Spannbacke 21 mittels eines Stiftes 22 gelenkig befestigt.

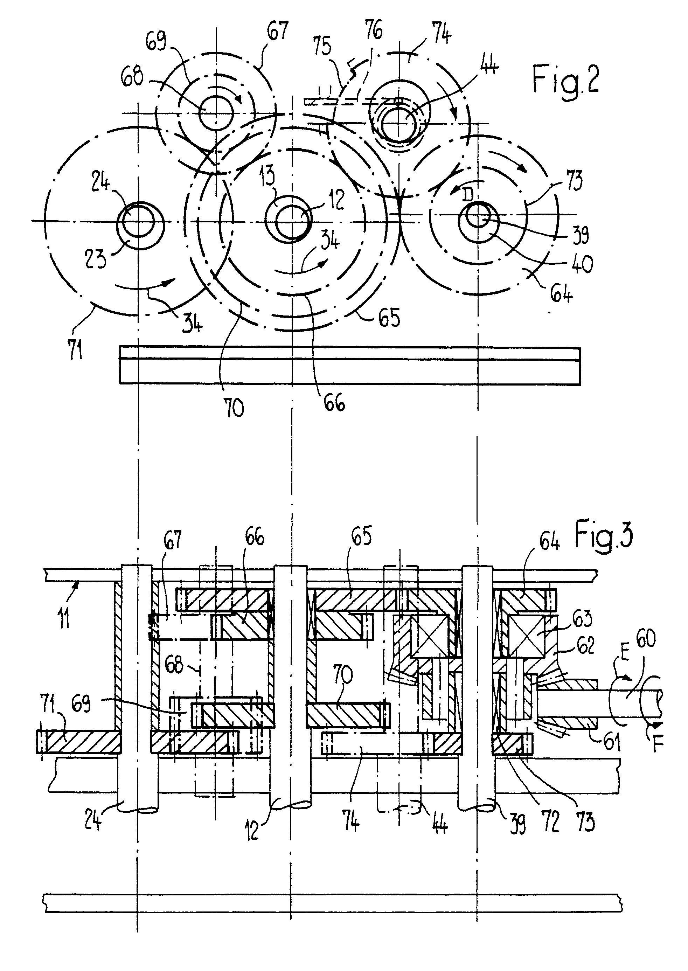

Diese Spannbacke 21 wirkt ebenfalls mit der als langgestreckte Schiene ausgebildeten Gegenbacke 17 zusammen. Der weitere Hebel 20 ist auf einem weiteren Exzenter 23 drehbar gelagert, der seinerseits fest auf einer Welle 24 sitzt. Der Exzenter 23 ist gleich wie der Exzenter 13 ausgebildet, ist jedoch inbezug auf diesen um 180° verdreht angeordnet. Die Wellen 12 und 24 sind durch ein formschlüssiges Getriebe, das anhand der Figuren 2 und 3 noch näher erläutert werden wird, aneinander gekoppelt, so dass sie mit der gleichen Drehzahl, und vorzugsweise gleichsinnig, drehen.

Auf der dem Betrachter abgekehrten Seite der Gegenbacke 17 ist ein Schieber 25 angeordnet. Dieser weist an seinem links erscheinenden Ende 25a ein Langloch 26 auf, durch das sich ein gehäusefester Führungsstift 27 erstreckt. Der Schieber 25 erstreckt sich über die Länge der Gegenbacke 17 hinaus und ist bei 28 an einem Arm 29 eines dreiarmigen Handhebels 30 angelenkt, der um einen gehäusefesten Zapfen 31 verschwenkbar ist. Der Schieber 25 ist mit zwei Anschlägen 32,33 versehen, die je dem unteren Ende 20a, bzw. 14a der Hebel 20 bzw. 14 zugeordnet sind. Wird der Handhebel 30 im Gegenuhrzeigersinn verschwenkt, treffen die Anschläge 32,33 auf die unteren Enden der Hebel 20 bzw. 14, verschwenken diese im Gegenuhrzeigersinn, so dass die Spannbacken 21,15 von der Gegenbacke 17 abgehoben werden. Damit ist das dargestellte Gerät 10 bereit, von der dem Betrachter näher erscheinenden Seite her die beiden einander überlappenden Endbereiche einer Bandschlaufe (nicht gezeigt) zwischen die Spannbacken 15,21 einerseits und die Gegenbacke 17 andererseits aufzunehmen.

Dann wird der Schieber 25 in die dargestellte Ausgangsstellung zurückverschoben, wodurch die beiden Spannbacken 15,21 durch die Wirkung der Feder 19 gegen den oberen der eingeführten Endbereiche der Bandschlaufe gedrückt werden.

Zum Spannen des Bandes werden die beiden Wellen 12,24 mit gleicher Drehzahl in Richtung des Pfeiles 34 angetrieben, wie das anhand der Figuren 2 und 3 noch näher zu erläutern sein wird. Ueber die beiden wie erwähnt um 180° zueinander versetzten Exzenter 13,23 werden die beiden Spannbacken 15,21 im Gegentakt hin und her angetrieben. Die eine Spannbacke 15 bzw. 21 führt dabei eine Vorschubbewegung in Richtung des Pfeiles A aus, während die andere Spannbacke 21 bzw. 15 eine Rücklaufbewegung in Richtung des Pfeiles B ausführt. Während ihrer Vorschubbewegung A sind die Spannbacken 15,21 jeweils in Eingriff mit dem obenliegenden Endbereich der Bandschlaufe, der damit gegenüber dem untenliegenden, auf der Gegenbacke 17 aufliegenden Endbereich von links nach rechts gezogen wird. Auf diese Weise wird die nicht dargestellte Bandschlaufe um den ebenfalls nicht gezeigten Gegenstand gespannt.

Während der Rücklaufbewegung in Richtung des Pfeiles B sind die Spannbacken 15,21 jeweils etwas vom Bandende abgehoben, um den durch die andere Spannbacke ausgeübten Spannvorgang nicht zu beeinträchtigen. Die Bewegungen der Spannbacken 15,21 sind dabei so aufeinander abgestimmt, dass jeweils die eine Vorschubbewegung ausführende Spannbacke mit dem Bandende in Eingriff kommt, bevor sich die rücklaufende Spannbacke vom Bandende abhebt.

Mit zunehmender Bandspannung nimmt auch das von den Wellen 12,24 bzw. vom nicht gezeigten Antriebsmotor aufzuwendende Drehmoment zu. Sobald die Bandspannung einen vorbestimmten Wert erreicht hat, werden die beiden Wellen 12,24 auf noch zu beschreibende Weise stillgesetzt. Damit Sicherheit eine der Spannbacken 15,21 im Eingriff mit dem zuvor nachgezogenen Endbereich des Bandes ist, wirkt diese nun nicht mehr angetriebenen Spannbacke als Rücklaufsperre und der Schweissvorgang kann einsetzen.

Für diesen Schweissvorgang dienen die nachstehend beschriebenen Bestandteile, die deswegen nur kurz erläutert sind, weil sie nicht zur erfindungsgemässen Anordnung zum Spannen gehören.

Der eine Arm 35a eines Winkelhebels 35 ist ebenfalls um den Zapfen 31 verschwenkbar gelagert. An denselben Arm ist über einen weiteren Zapfen 36 das eine Ende einer Schwinge 37 angelenkt. In ihrer Mitte weist die Schwinge 37 ein Langloch 38 auf, durch das sich ein auf einer Welle 39 sitzender Exzenter 40 erstreckt. Am unteren Ende der Schwinge 37 ist über einen Zapfen 21 eine Schweissbacke 42 angelenkt. Im Scheitelbereich des Winkelhebels 35 ist eine Bohrung 43 vorhanden, die mit Spiel von einem auf einer Welle 44 sitzenden Exzenter 45 durchsetzt ist. Der Exzenter 45 wirkt auf eine Bolzen 46, dessen unteres Ende verschiebbar das Ende des anderen Armes 35b des Winkelhebels 35 durchsetzt. Der Bolzen 46 ist von einer Druckfeder 47 umgeben, deren oberes Ende am Bolzen 46 und deren unteres Ende am anderen Arm 35b des Winkelhebels 35 abgestützt ist. Der Exzenter 45 weist an seinem Umfang eine Ausnehmung 48 auf.

An der dem Betrachter abgekehrten Seite des Winkelhebels 35 ist ein um einen Zapfen 49 verschwenkbarer Hebel 50 vorgesehen, der mittels einer Zugfeder 51 gegen den Umfang des Exzenters 45 gedrückt ist. Im Bereich des Berührungspunktes des Hebels 50 am Exzenter 45 ist der Hebel mit einem in die Ausnehmung 48 passenden Zahn 52 versehen.

Um den Zapfen 31 ist ein weiterer Hebel 53 schwenkbar gelagert, der mit dem Exzenter 45 antriebsverbunden ist. Eine Drehung des Exzenters 45 bewirkt ein Verschwenken dieses Hebels 53 nach unten. Dabei kommt letztere zur Einwirkung auf das obere Ende 14b des Hebels 14 und drückt diesen nach unten. Das hat ein Abheben der Spannbacke 15 vom Bandende zur Folge. Gleichzeitig wird die andere Spannbacke 21 über die Feder 19 gegen das obenliegende Bandende gedrückt, wodurch letzteres gegen ein Zurücklaufen gesichert ist.

Der Hebel 53 ist mit einem Arm 54 versehen, der mit einer Klinke 55 zusammenwirkt, die mit einem Messerhalter 56 verbunden ist. Das vorstehend erwähnte Verschwenken des Hebels 53 hat zur Folge, dass der Arm 54 ausser Eingriff mit der Klinke 55 kommt und sich der Messerhalter 56 samt dem in diesem gehaltenen Messer auf den obenliegenden Bandabschnitt absenkt.

Ist, wie bereits erwähnt, die gewünschte Spannung in der Bandschlaufe erreicht, werden die Wellen 12,24 der Exzenter 13,23 stillgesetzt. Gleichzeitig wird der Exzenter 45 in Richtung des Pfeiles C angetrieben, ebenso der Exzenter 40 in Richtung des Pfeiles D. Der Exzenter 45 wird aber nur um 180° gedreht, d.h. bis der Zahn 52 in die Ausnehmung 48 einrastet. Dadurch wird der Bolzen 46 nach unten verschoben und die Druckfeder 47 veranlasst den Winkelhebel 35 zu einer Verschwenkung im Gegenuhrzeigersinn. Damit wird auch die Schwinge 37 abgesenkt, bis die Schweissbacke 42 auf dem oben liegenden Endbereich der Bandschlaufe mit dem von der Druckfeder 47 ausgehenden Druck aufliegt. Da der Exzenter 40 im Langloch 38 auch dreht, führt die Schweissbacke 42 eine Hin- und Herbewegung aus, die solange anhält, bis die beiden Endbereiche der Bandschlaufe durch Reibschweissung miteinander verschweisst sind. Durch die Bewegung der Schweissbacke 42 wird das Messer gegen den oberen Bandabschnitt gezogen, was zu einem Durchtrennen des Bandes führt. Danach wird durch Anheben des Handhebels 30 über dessen anderen Arm 57 der Hebel 50 nach unten gedrückt, worauf der Zahn 52 aus der Ausnehmung 48 ausrastet und der Exzenter 45 unter der Wirkung einer nur in Figur 2 angedeuteten Rückholfeder eine Drehung entgegen der Richtung des Pfeiles C um 180° in die dargestellte Ausgangslage ausführt. Damit wird die Schweissbacke 42 und auch die Spannbacke 21 abgehoben. Das Gerät kann nun aus der fertiggestellten Bandschlaufe entfernt werden.

Anhand der schematischen Figuren 2 und 3 wird im folgenden ein Getriebesystem erläutert, mit welchem die vorstehend beschriebene Wirkungsweise des Gerätes gemäss Figur 1 erreicht werden kann.

Ein nicht dargestellter Antriebsmotor mit gegenläufigen Drehrichtungen treibt eine Antriebswelle 60 (Fig. 3) an, auf der ein Kegelrad 61 sitzt. Letzteres steht in Eingriff mit einem Zahnrad 62, das koaxial zur Welle 39 angeordnet ist. Dieses Zahnrad 62 ist über eine Freilaufkupplung 63 mit einem Zahnrad 64 verbunden, welches frei drehbar auf der Welle 39 gelagert ist. Die Freilaufkupplung 63 ist dann wirksam, wenn die Antriebswelle 60 in Richtung der Pfeiles E angetrieben wird. Das Zahnrad 64 kämmt mit einem Zahnrad 65, das frei drehbar auf der Welle 12 angeordnet ist. Mit dem Zahnrad 65 ist ein weiteres Zahnrad 66 drehfest verbunden, das ebenfalls frei drehbar auf der Welle 12 sitzt. Die beiden Zahnräder 65, 66 sitzen vorzugsweise auf einer gemeinsamen Nabe, die drehbar auf der Welle 12 gelagert ist. Das Zahnrad 66 steht im Eingriff mit einem weiteren Zahnrad 67, das drehfest auf einer Welle 68 sitzt, welche ein Treibrad 69 trägt, das ebenfalls drehfest auf der Welle 68 sitzt. Dieses Treibrad 69 kämmt mit zwei Zahnrädern 70 und 71, die drehfest mit den Wellen 12 bzw. 24 verbunden sind, welche wie anhand der Figur 1 erläutert zum Antreiben der Spannbacken 15, 21 dienen.

Wird nun zum Spannen des Umreifungsbandes die Antriebswelle 60 in Richtung des Pfeiles E gedreht, so wird das Zahnrad 64 über die Freilaufkupplung 63 im Uhrzeigersinn gedreht. Die Drehung des Zahnrades 64 wird über die Zahnräder 65, 66 und 67 auf das Treibrad 69 übertragen, das ebenfalls im Uhrzeigersinn dreht. Dieses Treibrad 69 treibt die beiden Zahnräder 70, 71 und damit die Wellen 12, 24 in Richtung der Pfeile 34, d.h. im Gegenuhrzeigersinn, an.

Nach Erreichen der gewünschten Bandspannung erfolgt wie bereits früher erwähnt ein Umschalten auf den Schweissvorgang. Der Antriebsmotor kehrt seine Drehrichtung und die Antriebswelle 16 wird nun in Richtung des Pfeiles F gedreht. Dabei wird die Freilaufkupplung 63 ausgeschaltet, wobei jedoch infolge Selbsthemmung eine der beiden Spannbacken 15 oder 21 mit dem gespannten Band in Eingriff bleibt und so dessen Spannung hält. Bei Drehung der Antriebswelle 60 in Richtung des Pfeiles F wird nun eine Freilaufkupplung 72 wirksam, die zwischen dem Zahnrad 62 und der Welle 39 angeordnet ist. Auf dieser nun im Gegenuhrzeigersinn angetriebenen Welle 39 sitzt ein Zahnrad 73, das in Richtung des Pfeiles D gedreht wird. Dieses Zahnrad 73 kämmt mit einem weiteren Zahnrad 74, das drehfest mit der Welle 44 verbunden ist, welche wie bereits beschrieben den Exzenter 45 trägt. Das Zahnrad 74 weist im Bereich seiner Stirnverzahnung eine Lücke 75 (Fig. 2) auf, welche nach einer Drehung von 180° aus dem Stillstand mit dem Zahnrad 73 zusammentrifft. In diesem Moment wird das Zahnrad 74 und damit auch die Welle 44 stillgesetzt, da vom Zahnrad 73 keine Antriebswirkung auf das Zahnrad 74 mehr erfolgen kann. Während dieser Drehung des Zahnrades 74 im Uhrzeigersinn wird eine in Figur 2 nur schematisch dargestellte Rückholfeder 76 gespannt.

Wie bereits erwähnt sitzt auf der Welle 44 der Exzenter 45, der mit einer Ausnehmung 48 versehen ist, die nach der erwähnten Drehung von 180° mit einem Zahn 52 am Hebel 50 zum Zusammenwirken kommt. Wie bereits früher erläutert hat diese Drehung des Exzenters 45 zur Folge, dass die Schweissbacke 42 nun gegen die übereinanderliegenden Bandabschnitte gedrückt wird und über den Exzenter 40, der auf der Welle 39 sitzt, hin und her angetrieben wird.

Es versteht sich, dass die anhand eines Handgerätes 10 beschriebene Spannanordnung auch in einer stationären Umreifungsmaschine eingesetzt werden kann. Dabei ist es sowohl in einem Handgerät wie auch in einer stationären Umreifungsmaschine möglich, die Schweissanordnung anders als wie in den Figuren gezeigt auszubilden, z.B. mit einer quer zur Bandlängsrichtung angetriebenen Schweissbacke. Anstatt einer Reibschweissanordnung kann beispielsweise auch eine mit Ultraschall arbeitende Schweissanordnung vorgesehen werden.

Zur Reduktion der Reibung kann es vor allem bei stationären Umreifungsmaschinen von Vorteil sein, die als Platte ausgebildete Gegenbacke 17 als mitlaufendes Band oder als Rollenauflage auszubilden.

**Ansprüche**

1. Anordnung an einem Umreifungsgerät zum Spannen einer um einen zu umreifenden Gegenstand gelegten Schlaufe eines Umreifungsbandes aus Kunststoff, mit einer zu einem in Spannrichtung (A) wirksamen Arbeitshub und einem Rückhub (B) hin und her antreibbaren Spannbacke (15), die mit einer bezüglich der Spannbacke (15) ortsfest angeordneten Gegenbacke (17) zusammenwirkt, wobei diese beiden Backen (15,17) dazu bestimmt sind, zumindest einen der Endbereiche der Schlaufe zwischen sich aufzunehmen und reibschlüssig auf diese einzuwirken, dadurch gekennzeichnet, dass der Spannbacke (15) eine weitere Spannbacke (21) zugeordnet ist, die gleichsinnig jedoch im Gegentakt zur erstgenannten Spannbacke (15) hin und her antreibbar ist und ihrerseits mit einer bezüglich der weiteren Spannbacke (21) ortsfesten Gegenbacke (17) zusammenwirkt.

2. Anordnung nach Patentanspruch 1, dadurch gekennzeichnet, dass der Antrieb der beiden Spannbacken (15,21) derart ausgelegt ist, dass das Ende des Arbeitshubes der einen Spannbacke (15 oder 21) den Beginn des Arbeitshubes der anderen Spannbacke (21 oder 15) überlappt.

3. Anordnung nach Patentanspruch 1, dadurch gekennzeichnet, dass die beiden Spannbacken (15,21) mit einer gemeinsamen Gegenbacke (17) zusammenwirken.

4. Anordnung nach Patentanspruch 1, dadurch gekennzeichnet, dass jede Spannbacke (15,21) gelenkig mit einem Hebel (14,20) verbunden ist, der drehbar auf einem Exzenter (13,23) gelagert ist.

5. Anordnung nach Patentanspruch 1, bei der die erstgenannte Spannbacke (15) gelenkig am einen Ende (14a) eines zweiarmigen Hebels (14) befestigt ist, der in dessen Mitte drehbar auf einem angetriebenen Exzenter (13) gelagert ist, dadurch gekennzeichnet, dass die weitere Spannbacke (21) gelenkig am Ende (20a) eines weiteren Hebels (20) befestigt ist, der seinerseits drehbar auf einem weiteren, angetriebenen Exzenter (23) gelagert ist, wobei die beiden Hebel (14,20) unter der Wirkung einer Federkraft (19) stehen, die die Spannbacken (15,21) auf die zugeordnete Gegenbacke (17) vorspannt.

6. Anordnung nach Patentanspruch 5, dadurch gekennzeichnet, dass die beiden Hebel (14,20) mittels einer Druckfeder (19) aneinander gekoppelt sind, deren eines Ende am anderen Ende (18) des zweiarmigen Hebels (14) und deren anderes Ende am genannten Ende (20a) des weiteren Hebels (20) abgestützt ist.

7. Anordnung nach Patentanspruch 4, dadurch gekennzeichnet, dass die beiden Exzenter (13,23) gleichsinnig und vorzugsweise mit derselben Drehzahl angetrieben, jedoch in Bezug aufeinander verdreht angeordnet sind, vorzugsweise um etwa 180°.

8. Anordnung nach Patentanspruch 4, dadurch gekennzeichnet, dass jeder Exzenter (12,23) fest auf einer eigenen drehend antreibbaren Welle (12,24) sitzt.

9. Anordnung nach Patentanspruch 8, dadurch gekennzeichnet, dass auf jeder Welle (12,24) drehfest ein Zahnrad (70,71) sitzt und beide Zahnräder (70,71) mit einem gemeinsamen treibenden Zahnrad (69) in Eingriff stehen.

Fig.1

EP 0 415 272 A1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D | FR-A-2 613 320 (FROMM HOLDING)<br>* Seite 2, Zeilen 11-21; Ansprüche 1-9; Figuren 3,8 *<br>--- | 1 | B 65 B 13/22 |
| A,D | FR-A-2 276 221 (STRAPEX)<br>* Seite 4, Zeile 9 - Seite 5, Zeile 17; Figur 1 *<br>----- | 1 | |

**RECHERCHIERTE SACHGEBIETE (Int. Cl.5)**

B 65 B

Der vorliegende Recherchenbericht wurde für alle Patentansprüche erstellt

| Recherchenort | Abschlußdatum der Recherche | Prüfer |
|---|---|---|
| DEN HAAG | 19-11-1990 | CLAEYS H.C.M. |